# EUROPEAN PATENT SPECIFICATION

(11) **EP 1 910 784 B1**
(45) Date of publication and mention of the grant of the patent: **18.03.2020**
(21) Application number: 06776566.9
(22) Date of filing: 02.08.2006
(51) Int. Cl.: G01F 23/284

(54) **POTENTIAL SEPARATION FOR FILL LEVEL RADAR**
POTENTIALTRENNER FÜR RADAR-FÜLLSTANDSMESSGERÄT
ÉLÉMENT D'ISOLEMENT POUR RADAR DE DÉTECTION DE NIVEAU

(30) Priority: 04.08.2005 DE 102005036715; 04.08.2005 US 705597 P
(43) Date of publication of application: 16.04.2008
(73) Proprietor: VEGA Grieshaber KG, 77709 Wolfach (DE)
(72) Inventor: GRIESSBAUM, Karl, 77796 Mühlenbach (DE); FEHRENBACH, Josef, 77716 Haslach (DE); SCHULTHEISS, Daniel, 78132 Hornberg (DE)
(74) Representative: Maiwald Patent- und Rechtsanwaltsgesellschaft mbH
(86) International application number: PCT/EP2006/007652
(87) International publication number: WO 2007/017170

(56) References cited:
- WO-A1-2005/038414
- WO-A2-2006/110329
- DE-A1- 19 617 963
- US-A- 5 872 494
- US-A1- 2001 047 685
- US-A1- 2002 067 229
- US-A1- 2003 151 560

## Description

The present invention relates to fill level measuring. In particular, the present invention relates to a fill level radar with potential separation for determining the fill level in a tank.

For considerations relating to measuring technology and for safety reasons the potential of the electrical supply line of a radar sensor may be separated from the potential of the, often metallic, fill level container. This may for example result in a reduction in noise effects during measuring, and to a reduction in the susceptibility to interference of the measuring signals. Furthermore, such insulation may result in increased safety, for example in relation to avoiding fires that may occur as a result of a short circuit or a defect in the electrical supply line or in the electronics of the fill level radar. Thus, undesirable spark-over could, for example, lead to ignition of, or damage to, the feed material.

Furthermore, such insulation may be used for thermal separation of the feed material from the electronics, which may be necessary in particular in the case of large temperature differences between the interior of the tank and the surroundings of the tank.

WO 2005/038414 relates to a method and a device for insulating a fill level radar. To this effect the electrical insulator is arranged so as to be across an open end of a waveguide (in the following also named hollow conductor). The other end of the hollow conductor feeds the aerial. The insulator is located directly at the electronics, or it separates the hollow conductor into a lower hollow conductor and an upper hollow conductor.

US 2001/0047685 A1 relates to a fill level gauge operating by the radar principle comprising a microwave generator, a waveguide, a horn radiator, an impedance transformer, and a connecting flange. An obturator plate is designed as an integral extension of the impedance transformer and is positioned between the horn radiator and the connecting flange.

US 2003/0151560 A1 relates to an antenna system for a level measuring device for emitting microwaves by means of an antenna horn. At the front side of the smaller funnel aperture thereof, HF energy in the form of microwave signals is directly axially coupled by means of planar structures having one patch or several patches.

US 2002/0067229 A1 relates to a microwave window for the spatial separation and microwave-transmitting connection between an external microwave conductor and an internal microwave conductor.

US 5,872,494 relates to a level gage waveguide process seal having wavelength based dimensions. A waveguide assembly for a process sealed level gage thereby includes first and second waveguide portions, a process sealing cavity and a mechanical barrier.

WO 2006/110329 A2 relates to a tank seal for guided wave radar level measurement. A microwave level gauge for measuring a level of a process material in a tank includes a ceramic seal which is disposed adjacent to an opening in the tank and adapted to isolate circuitry from the process material.

It is an object of the present invention to state improved potential separation for a fill level radar.

According to the present invention a fill level radar with potential separation is provided as set out in independent claim 1.

In this way potential separation may be provided directly between the aerial and the hollow conductor. Thus the aerial, which is arranged in the interior of a feed material container, is insulated from the hollow conductor, which is arranged outside the fill level container. Thus, among other things, insulation between the interior of the container and the exterior of the container is provided.

According to a further exemplary embodiment of the present invention, the separation element is designed to electrically insulate the aerial from the feed device up to a defined voltage. For example, the separation element is dimensioned such that adequate electrical insulation up to a defined maximum voltage is ensured.

Furthermore, according to another exemplary embodiment of the present invention the separation element is designed to thermally insulate the aerial from the feed device. This may, in particular, for example be of advantage in cases where the thermal conditions in the interior of the tank are to be kept constant and insulated from external thermal influences. In particular in the case of large temperature differences between the interior of the container and the exterior of the container such thermal insulation may result in considerable advantages.

Likewise, in cases where the temperatures in the container are extreme it may be advantageous to largely keep these temperatures away from the electronics so as not to risk any temperature-related influence of the function, or even failure of the electronics.

According to the present invention the feed device comprises a hollow conductor (waveguide) and a radiation source, wherein the radiation source is designed to generate the electromagnetic waves, and wherein the hollow conductor is designed to conduct the electromagnetic waves from the radiation source to the aerial. Thus the aerial is connected to the radiation source by way of a hollow conductor, wherein the hollow conductor and the aerial are insulated from each other by the separation element. Such insulation may be both electrical and thermal.

According to a further exemplary embodiment of the present invention the separation element comprises a dielectric. Such a dielectric may be good electrical insulation characteristics and most of the time may also provide for satisfactory thermal insulation characteristics and may in particular be suitable for the creation of insulating layers.

According to a further exemplary embodiment of the present invention the separation element is a dielectric barrier, comprising a layer of solid dielectric material.

Such layers can be produced easily and feature good electrically insulating characteristics as well as good breakdown voltages.

According to a further embodiment of the present invention a connection between the separation element and the feed device or between the separation element and the aerial is made in such a way that the feed device is held so as to be rotatable relative to the aerial. In this way, for example, rotatability between the sensor housing with inbuilt circuit and the aerial subassembly may be provided. This may improve the flexibility of the fill level radar since changing environmental conditions or installation conditions may often require other sensor housing positions.

Furthermore, depending on interfering container installations, which apart from the fill level surface to be measured may also generate reflections and thus make measuring more difficult, it may often be advantageous to be able to rotate the polarisation of the electromagnetic wave transmitted from the aerial. By way of this polarisation rotation certain undesired reflections may be minimised so that in this way measuring the feed material becomes more reliable and more accurate. Up to now it has been customary, to this effect, to rotate the complete fill level sensor in its installed position. In the case of sensors with a flange attachment this means that all installation screws of the flange have to be undone and, corresponding to the hole division of the flange, to rotate this flange for example in 90°- or 60°-steps. In this way fine adjustment of the polarisation beyond the incremental width defined by the hole division is not possible.

In the case of sensors with a screw-in thread the polarisation rotation has to take place by corresponding rotation of the screw-in thread, which, while being possible at correspondingly fine increments, can however be problematic from the point of view of the sealing function of the thread.

By means of the rotatability, proposed in the present invention, between the separation element and the feed device, or between the separation element and the aerial, a polarisation rotation may take place without the need to rotate the aerial, which normally is firmly mechanically connected to the flange or the screw-in thread.

In the case of an unchanged position of the flange attachment or of the screw-in thread the polarisation may be rotated by rotating the feed device, perhaps coupled with the sensor housing, at any desired fineness, without any installation effort and without impeding the container seal.

According to a further exemplary embodiment of the present invention the connection between the separation element and the feed device or between the separation element and the aerial is designed so as to be unclippable.

By designing the fill level radar with an undoable unclippable connection, by means of which the entire upper part of the fill level radar may be pulled from the aerial, the electronics together with the hollow conductor (if present) may simply be removed or exchanged. This may enhance the flexibility of the radar, in particular in the case of repair or maintenance because deinstallation of the upper (external) component subassembly may be possible in a simple manner without the flange having to be removed from the aerial or the aerial having to be undone in some other way from the cover of the fill level container.

According to a further exemplary embodiment of the present invention the connection between the separation element and the feed device or between the separation element and the aerial is gasproof or waterproof.

In this way, materials transport between the tank on the side of the aerial and the external environment on the side of the feed device may be prevented. It may thus, for example, be possible to prevent corrosion or some other damage or destruction of the fill level radar above the aerial. Furthermore, in this way the undesirable infeed of solid, liquid or gaseous materials into the tank may be prevented. Moreover, it may be possible to avoid pressure equalisation between the interior of the tank and the exterior of the tank.

According to a further exemplary embodiment of the present invention the fill level radar further comprises a measuring circuit for generating microwave signals that are transmitted by way of the aerial, and/or for measuring electromagnetic waves that are received by the aerial, wherein the measuring circuit is at least partially combined with the separation element.

By at least partially combining the measuring circuit with the separation element, space may be saved.

According to the present invention the aerial is designed as a horn aerial or a parabolic aerial. In this way it may be possible to insulate various aerials from the potential of the feed device or to thermally separate them from it.

According to a further exemplary embodiment of the present invention the hollow conductor is designed as a round hollow conductor or a rectangular hollow conductor.

According to a further exemplary embodiment of the present invention the aerial is designed as a parabolic aerial, wherein the feed device comprises a hollow conductor with a first region. In this arrangement the first region of the hollow conductor protrudes into the parabolic aerial, wherein the separation agent partly encases the hollow conductor.

Thus, by means of the separation element, the hollow conductor which feeds the aerial may be insulated from the parabolic aerial and from an attachment flange connected to said parabolic aerial.

According to a further exemplary embodiment of the present invention the separation element completely encases the first region of the hollow conductor. In this way complete insulation of the hollow conductor that feeds the aerial may be provided by a complete envelope, for example a dielectric envelope.

Further exemplary embodiments of the present invention are stated in the subordinate claims. Below, preferred exemplary embodiments of the present invention are described with reference to the figures.
Fig. 1 shows the potential separation of a fill level radar according to an exemplary embodiment which does not form part of the present invention.
Fig. 2 shows the potential separation of an aerial according to a further exemplary embodiment which does not form part of the present invention.
Fig. 3 shows the potential separation for a parabolic aerial according to a further exemplary embodiment which does not form part of the present invention.
Fig. 4 shows further potential separation for a parabolic aerial according to a further exemplary embodiment which does not form part of the present invention.
Fig. 5 shows the potential separation according to the present invention.

In the following description of the figures the same reference characters are used for identical or similar elements.

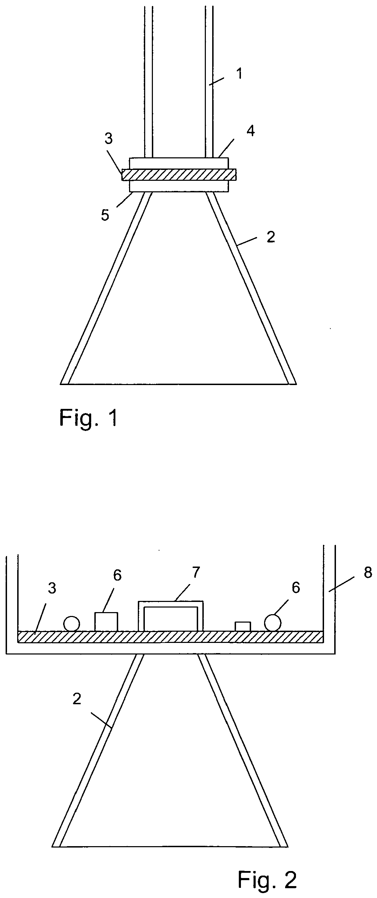

Fig. 1 shows part of a fill level radar with potential separation according to an exemplary embodiment. As shown in Fig. 1, the arrangement comprises a hollow conductor 1 (i. e. a waveguide) that is provided for conducting electromagnetic waves, an aerial 2 for transmitting and/or receiving electromagnetic waves, and a separation element 3 for insulating the aerial 2 from the hollow conductor 1. As is shown in Fig. 1, the separation element 3 is arranged directly at the aerial 2. To this effect the aerial 2 comprises a connecting element 5. The separation element 3 may, for example, be vapour deposited or deposited in some other way onto the connecting element 5. Of course, it may be also possible for the separation element 3 to be glued or clipped onto the connecting element, or to be attached in some other way.

The hollow conductor 1 comprises a second connecting element 4, which is arranged on the other side of the separation element 3.

The separation element may be designed in the form of a dielectric barrier that comprises a layer of a solid dielectric material. To this effect the thickness of the separation element 3 may be adequate to provide sufficient electrical insulation. For example, the thickness may be dimensioned such that only from a certain maximum voltage between the hollow conductor 1 and the aerial 2 does noticeable current conduction take place between these two elements 1, 2 by way of the separation element 3. A typical thickness for such a separation element 3 is for example 0.5 mm. Of course, the separation element 3 can also be considerably thicker or (e.g. if the maximum voltage is lower) it can be thinner.

The hollow conductor 1 is used for conducting electromagnetic waves, in particular microwaves of a frequency of, for example, 6 to 85 GHz. Of course the hollow conductors 1 and the aerial 2 can also be designed for conducting or detecting or transmitting electromagnetic radiation at higher frequencies. Furthermore, conducting, detecting or transmitting electromagnetic radiation with a frequency that is lower than 6 GHz may also be possible.

The hollow conductor 1 may for example comprise a round or rotationally symmetrical cross section. Furthermore, the hollow conductor 1 may comprise an angular cross section (rectangular or polygonal) or some completely different cross section.

Moreover, the hollow conductor can be air-filled or can comprise a filling of dielectric material.

The connection between the hollow conductor 1 and the separation element 3, and/or between the separation element 3 and the aerial 2, is designed such that the hollow conductor 1 and the aerial 2 are held so as to be rotatable relative to each other. In this way even with the aerial (which is firmly connected to a flange in the cover of the fill level container) installed, subsequent rotary adjustment of the hollow conductor 1 (and thus of the housing, including the electronics, located thereon) relative to the aerial 2 may be possible. The aerial 2 and the sensor housing (not shown in Fig. 1) with built-in circuit can thus be rotated in relation to each other.

Furthermore, the connection between the separation element 3 and the upper connection element 4 or between the separation element 3 and the connection element 5 on the aerial side may be designed so as to be unclippable so that simple exchanging or separating or plugging together of the hollow conductor 1 and the aerial 2 may become possible.

Of course, the separation element 3 may also be firmly connected to the two connection elements 4, 5 so that any maladjustment or undesirable unclipping may be prevented.

In particular, the separation element 3 may ensure waterproof or even gasproof connection between the aerial 2 and the hollow conductor 1 so that materials transport between the aerial and thus the interior of a fill level container and the hollow conductor and thus the electronics connected to it or to the outside environment is prevented.

To this effect it may be possible, in a way that is customary for the average person skilled in the art, to provide seals, e.g. O-rings, at defined positions.

Furthermore, it may be ensured that the separation element does not excessively impede microwave propagation in the hollow conductor. To this effect it may be possible, by installing so-called λ/4 transformation lines, to optimise wave transition at the location of the separation element. In this arrangement the transformation line is a circumferential gap between the two metal parts that from both sides are adjacent to the separation element. The gap may be filled by the separation element and preferably has a radial extension of λ/4, with λ designating the wavelength of the microwave guided in the gap. The open end of the gap on the outer circumference of the circle is transformed, by the transformation line, as a short circuit onto the inner circumference of the circle with the diameter of the hollow conductor. This short circuit replaces the hollow conductor wall that is absent as a result of the separation element.

Fig. 2 shows an aerial arrangement with a separation element 3 according to a further exemplary embodiment. In this arrangement a measuring circuit for measuring electromagnetic waves received by the aerial is combined with the separation element 3. In this arrangement the measuring circuit 6 comprises, for example, a plural number of SMD components that are mounted on the separation element. In this arrangement the cap 7 is used to close off the wave line. Furthermore, a housing 8 is provided, which protects the measuring circuit 6. The measuring circuit 6 is completely insulated from the aerial 2 by the separation element 3.

In this arrangement the separation element 3 not only serves the function of insulating but also, on the side facing away from the container, comprises strip conductors and soldering pads for the components of the measuring circuit. In the simplest case the separation element is a printed circuit board which however must not contain any through-plating so as not to cancel out the electrical insulation. Of course it is also possible to provide multilayer printed circuit boards with through-plating that does not conduct through all layers, so-called blind-hole through-plating.

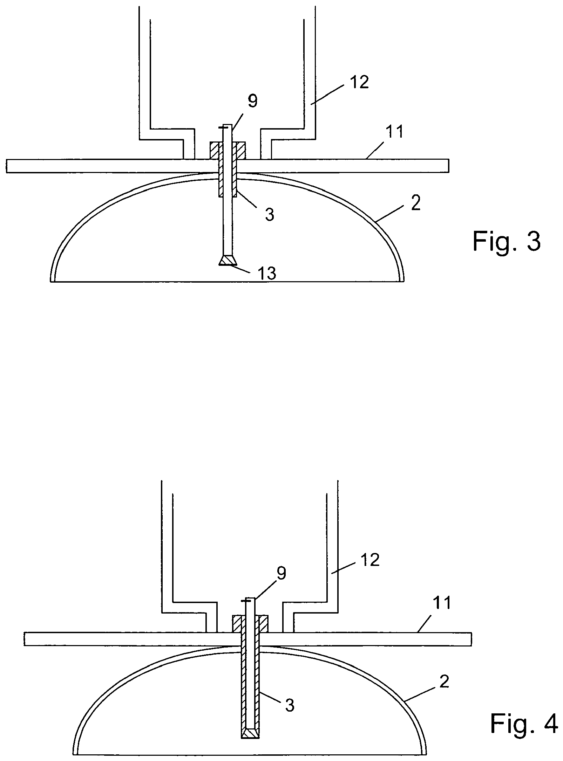

Fig. 3 shows an aerial arrangement for a fill level measuring device which comprises a parabolic aerial 2. In this arrangement the feed device comprises a hollow conductor 9, into which the signals to be transmitted are coupled in by way of a coupling-in pin. By way of the hollow conductor 9 the waves are guided to the counter reflector 13 from where they are radiated out in a focused manner, by way of reflection, via the parabolic reflector 2. In order to protect the feed device from the incoming container atmosphere it is common to fill the space between the lower end of the hollow conductor and the counter reflector by means of a dielectric body. This prevents gas and humidity from entering the hollow conductor 9. Fig. 3 also indicates that the parabolic aerial is connected with a flange 11 for installation in the container, and that a surrounding housing 12 for protecting the electronics (not shown) and the feed device is provided.

Furthermore, a tubular dielectric barrier 3 is provided, which partly encases the hollow conductor 9 which feeds the aerial, and insulates said hollow conductor 9 from the parabolic aerial 2 and the attachment flange 11 connected thereto.

Fig. 4 shows an arrangement according to a further exemplary embodiment, in which the part of the hollow conductor 9, which part protrudes into the parabolic aerial 2, is completely encased by the dielectric barrier 3. In this way the part of the hollow conductor 9, which part protrudes into the parabolic aerial 2, is completely insulated from the region of the flange 11, which region is located on the side of the aerial (thus for example from the internal region of a feed material container). Apart from electrical insulation, this protective layer can also provide effective protection against corrosion or other destruction of the hollow conductor 9. Furthermore, this encasing prevents any materials transport between the internal region of the fill level container and the external region of the fill level container.

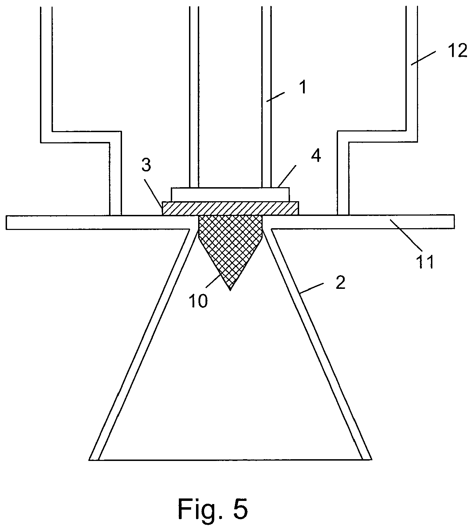

Fig. 5 shows a fill level radar according to the present invention. In this arrangement, apart from the separation element 3, the aerial 2 comprises an additional dielectric body 10, which extends into the aerial and tapers to a point. In the case of a round hollow conductor 1 this additional dielectric body 10 is conical in shape, while in the case of a hollow conductor 1 with a rectangular cross section it is pyramid shaped. In this way coupling between the hollow conductor 1 and the aerial 2 is enhanced, and the quality of the transmission, into the hollow conductor 1, of the electromagnetic signals detected by the aerial is improved. Furthermore, the point facilitates the dripping off of any condensate that may form, which arrangement enhances the signal quality and thus the measuring reliability. In this arrangement the separation element 3 and the second dielectric body 10 can be different bodies. However, they can also comprise a continuous piece so that at the same time insulation and improved coupling are provided.

The invention may particularly be well suited to fill level measuring devices, however it is in no way limited to this field of application. It can be used wherever aerials for transmitting or receiving electromagnetic waves have to be insulated from a corresponding feed device.

In addition it should be pointed out that "comprising" does not exclude other elements or steps, and "a" or "one" does not exclude a plural number. Furthermore, it should be pointed out that characteristics or steps which have been described with reference to one of the above embodiments can also be used in combination with other characteristics or steps of other embodiments described above. Reference characters in the claims are not to be interpreted as limitations.

## Claims

1. A fill level radar with potential separation between an aerial (2) and a feed device (1) of the fill level radar, for determining the fill level in the tank, the fill level radar comprising:
a horn aerial or a parabolic aerial (2) for at least one of transmitting and receiving electromagnetic waves and for being arranged in the interior of the tank;
a feed device (1) comprising a waveguide and a radiation source for feeding the electromagnetic waves to the aerial and for being arranged outside the tank, wherein the radiation source is designed to generate the electromagnetic waves, and wherein the waveguide is designed to conduct the electromagnetic waves from the radiation source to the aerial (2);
a separation element (3) for electrically isolating the aerial from the feed device and for providing a potential separation between the aerial and the feed device;
wherein the separation element is arranged directly at the aerial;
wherein the aerial (2) and the feed device (1) are electrically insulated from each other.

2. The fill level radar according to claim 1,
wherein the separation element (3) is designed to electrically insulate the aerial (2) from the feed device (1) up to a defined voltage.

3. The fill level radar according to one to claim 1 or 2,
wherein the separation element (3) is designed to thermally insulate the aerial (2) from the feed device (1).

4. The fill level radar according to one of the previous claims,
wherein the separation element (3) comprises a dielectric.

5. The fill level radar according to claim 4,
wherein the separation element (3) is a dielectric barrier, comprising a layer of solid dielectric material.

6. The fill level radar according to one of claims 1 to 5,
wherein a connection between the separation element and the feed device or between the separation element and the aerial is made in such a way that the feed device is held so as to be rotatable relative to the aerial.

7. The fill level radar according to one of the previous claims,
wherein the connection between the separation element (3) and the feed device (1) or between the separation element and the aerial (2) is designed so that the feed device is unclippable from the aerial.

8. The fill level radar according to one of the previous claims,
wherein the connection between the separation element and the feed device or between the separation element and the aerial is gasproof or waterproof.

9. The fill level radar according to one of the previous claims,
further comprising a measuring circuit for measuring electromagnetic waves received by the aerial (2);
wherein the measuring circuit is at least partially combined with the separation element.

10. The fill level radar according to one of the previous claims,
wherein the waveguide (1) is designed as a round hollow conductor or a rectangular waveguide.

11. The fill level radar according to one of the previous claims,
wherein the aerial (2) is designed as a parabolic aerial;
wherein the feed device (1) comprises a waveguide with a first region;
wherein the first region of the waveguide protrudes into the parabolic aerial; and
wherein the separation element (3) partly encases the waveguide.

12. The fill level radar according to claim 11,
wherein the separation element (3) completely encases the first region of the waveguide.

## Patentansprüche

1. Ein Füllstandradar mit Potentialtrennung zwischen einer Antenne (2) und einer Speisevorrichtung (1) des Füllstandradars zur Bestimmung eines Füllstands in einem Tank, das Füllstandradar umfassend:
eine Hornantenne oder eine Parabolantenne (2) zu mindestens einem vom Aussenden und / oder Empfangen von elektromagnetischen Wellen und zum Anordnen im Inneren des Tanks;
eine Speisevorrichtung (1), die einen Hohlleiter und eine Strahlungsquelle umfasst, zur Speisung der Antenne mit den elektromagnetischen Wellen und zur Anordnung außerhalb des Tanks,
wobei die Strahlungsquelle zur Erzeugung der elektromagnetischen Wellen ausgeführt ist und wobei der Hohlleiter zur Leitung der elektromagnetischen Wellen von der Strahlungsquelle zu der Antenne (2) ausgeführt ist;
ein Trennelement (3) zur elektrischen Isolation der Antenne von der Speisevorrichtung und zum Bereitstellen einer Potentialtrennung zwischen der Antenne und der Speisevorrichtung;
wobei das Trennelement direkt an der Antenne angeordnet ist;
wobei die Antenne (2) und die Speisevorrichtung (1) voneinander elektrisch isoliert sind.

2. Das Füllstandradar nach Anspruch 1,
wobei das Trennelement (3) bis zu einer definierten Spannung zur elektrischen Isolation der Antenne (2) von der Speisevorrichtung (1) ausgeführt ist.

3. Das Füllstandradar nach Anspruch 1 oder 2,
wobei das Trennelement (3) zur thermischen Isolation der Antenne (2) von der Speisevorrichtung (1) ausgeführt ist.

4. Das Füllstandradar nach einem der vorhergehenden Ansprüche,
wobei das Trennelement (3) ein Dielektrikum aufweist.

5. Das Füllstandradar nach Anspruch 4,
wobei das Trennelement (3) eine dielektrische Barriere ist, die eine Schicht aus festem dielektrischem Material umfasst.

6. Das Füllstandradar nach einem der Ansprüche 1 bis 5,
wobei eine Verbindung zwischen dem Trennelement und der Speisevorrichtung oder zwischen dem Trennelement und der Antenne derart ausgeführt ist, dass die Speisevorrichtung relativ zu der Antenne verdrehbar gelagert ist.

7. Das Füllstandradar nach einem der vorhergehenden Ansprüche,
wobei die Verbindung zwischen dem Trennelement (3) und der Speisevorrichtung (1) oder zwischen dem Trennelement und der Antenne (2) derart ausgeführt ist, dass die Speisevorrichtung von der Antenne absteckbar ist.

8. Das Füllstandradar nach einem der vorhergehenden Ansprüche,
wobei die Verbindung zwischen dem Trennelement und der Speisevorrichtung oder zwischen dem Trennelement und der Antenne gasdicht oder wasserdicht ist.

9. Das Füllstandradar nach einem der vorhergehenden Ansprüche,
weiterhin umfassend eine Messschaltung zur Messung von der Antenne (2) empfangener elektromagnetischer Wellen;
wobei die Messschaltung zumindest teilweise mit dem Trennelement kombiniert ist.

10. Das Füllstandradar nach einem der vorhergehenden Ansprüche,
wobei der Hohlleiter (1) als ein Rundhohlleiter oder ein Rechteckhohlleiter ausgebildet ist.

11. Das Füllstandradar nach einem der vorhergehenden Ansprüche,
wobei die Antenne (2) als Parabolantenne ausgebildet ist;
wobei die Speisevorrichtung (1) einen Hohlleiter mit einem ersten Bereich umfasst;
wobei der erste Bereich des Hohlleiters in die Parabolantenne hineinragt; und
wobei das Trennelement (3) den Hohlleiter teilweise ummantelt.

12. Das Füllstandradar nach Anspruch 11,
wobei das Trennelement (3) den ersten Bereich des Hohlleiters vollständig ummantelt.

## Revendications

1. Radar de niveau de remplissage avec séparation de potentiel entre une antenne (2) et un dispositif d'alimentation (1) du radar de niveau de remplissage, permettant de déterminer le niveau de remplissage du réservoir, le radar de niveau de remplissage comprenant :
une antenne cornet ou une antenne parabolique (2) destinée à transmettre et/ou à recevoir des ondes électromagnétiques et à être placée à l'intérieur du réservoir ;
un dispositif d'alimentation (1) comprenant un guide d'ondes et une source de rayonnement, destiné à alimenter l'antenne en ondes électromagnétiques et à être placé à l'extérieur du réservoir, dans lequel la source de rayonnement est conçue pour produire les ondes électromagnétiques, et dans lequel le guide d'ondes est conçu pour acheminer les ondes électromagnétiques de la source de rayonnement à l'antenne (2) ;
un élément de séparation (3) destiné à isoler électriquement l'antenne du dispositif d'alimentation et à assurer une séparation de potentiel entre l'antenne et le dispositif d'alimentation ;
dans lequel l'élément de séparation est placé directement sur l'antenne ;
dans lequel l'antenne (2) et le dispositif d'alimentation (1) sont isolés électriquement l'un de l'autre.

2. Radar de niveau de remplissage selon la revendication 1,
dans lequel l'élément de séparation (3) est conçu pour isoler électriquement l'antenne (2) du dispositif d'alimentation (1) jusqu'à une tension définie.

3. Radar de niveau de remplissage selon l'une des revendications 1 et 2,
dans lequel l'élément de séparation (3) est conçu pour isoler thermiquement l'antenne (2) du dispositif d'alimentation (1).

4. Radar de niveau de remplissage selon l'une des revendications précédentes,
dans lequel l'élément de séparation (3) comprend un diélectrique.

5. Radar de niveau de remplissage selon la revendication 4,
dans lequel l'élément de séparation (3) est une barrière diélectrique comprenant une couche de matériau diélectrique solide.

6. Radar de niveau de remplissage selon l'une des revendications 1 à 5,
dans lequel un raccordement entre l'élément de séparation et le dispositif d'alimentation ou entre l'élément de séparation et l'antenne est réalisé de telle sorte que le dispositif d'alimentation soit maintenu de manière à pouvoir tourner par rapport à l'antenne.

7. Radar de niveau de remplissage selon l'une des revendications précédentes,
dans lequel le raccordement entre l'élément de séparation (3) et le dispositif d'alimentation (1) ou entre l'élément de séparation et l'antenne (2) est conçu de manière que l'élément d'alimentation ne puisse être dégrafé de l'antenne.

8. Radar de niveau de remplissage selon l'une des revendications précédentes,
dans lequel le raccordement entre l'élément de séparation et le dispositif d'alimentation ou entre l'élément de séparation et l'antenne est étanche aux gaz ou imperméable à l'eau.

9. Radar de niveau de remplissage selon l'une des revendications précédentes,
comprenant en outre un circuit de mesure destiné à mesurer des ondes électromagnétiques reçues par l'antenne (2) ;
dans lequel le circuit de mesure est au moins en partie combiné avec l'élément de séparation.

10. Radar de niveau de remplissage selon l'une des revendications précédentes,
dans lequel le guide d'ondes (1) est conçu sous la forme d'un conducteur creux rond ou d'un guide d'ondes rectangulaire.

11. Radar de niveau de remplissage selon l'une des revendications précédentes,
dans lequel l'antenne (2) est conçue sous la forme d'une antenne parabolique ;
dans lequel le dispositif d'alimentation (1) comprend un guide d'ondes doté d'une première région ;
dans lequel la première région du guide d'ondes fait saillie dans l'antenne parabolique ; et
dans lequel l'élément de séparation (3) entoure en partie le guide d'ondes.

12. Radar de niveau de remplissage selon la revendication 11,
dans lequel l'élément de séparation (3) entoure complètement la première région du guide d'ondes.
